(19) **Europäisches Patentamt**
**European Patent Office**
**Office européen des brevets**

(11) **EP 2 926 558 B1**

(12) # EUROPEAN PATENT SPECIFICATION

(45) Date of publication and mention
of the grant of the patent:
**31.01.2018 Bulletin 2018/05**

(51) Int Cl.:
**G06T 5/50** (2006.01)     **G06T 5/00** (2006.01)

(21) Application number: **13858441.2**

(22) Date of filing: **04.11.2013**

(86) International application number:
**PCT/IN2013/000681**

(87) International publication number:
**WO 2014/083574 (05.06.2014 Gazette 2014/23)**

(54) **A METHOD AND SYSTEM FOR EXTENDED DEPTH OF FIELD CALCULATION FOR MICROSCOPIC IMAGES**

VERFAHREN UND SYSTEM ZUR ERWEITERTEN FELDTIEFENBERECHNUNG FÜR MIKROSKOPISCHE BILDER

PROCÉDÉ ET SYSTÈME DE CALCUL DE PROFONDEUR DE CHAMP ÉTENDUE POUR DES IMAGES MICROSCOPIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2012 IN 5010CH2012**

(43) Date of publication of application:
**07.10.2015 Bulletin 2015/41**

(73) Proprietor: **L & T Technology Services Limited
Mysore 570 018
KRN (IN)**

(72) Inventors:
• **ROUT, Rabi**
  **Mysore 570018**
  **Karnataka (IN)**
• **DESAI, Vajendra**
  **Mysore 570018**
  **Karnataka (IN)**
• **RAMARAJU, Harikrishnan**
  **Mysore 570018**
  **Karnataka (IN)**
• **SUKUMARAN, Gineesh**
  **Mysore 570018**
  **Karnataka (IN)**
• **GANESH, Sistu**
  **Mysore 570018**
  **Karnataka (IN)**
• **PRIYADARSHI, Devvrata**
  **Mysore 570018**
  **Karnataka (IN)**
• **ABRAHAM, Eldho**
  **Mysore 570018**
  **Karnataka (IN)**
• **MISHRA, Saurabh**
  **Mysore 570018**
  **Karnataka (IN)**
• **KUMAR SAHOO, Sudipta**
  **Mysore 570018**
  **Karnataka (IN)**
• **TRIPATHI, Nivedita**
  **Mysore 570018**
  **Karnataka (IN)**
• **GOUTHAM, Siddhartha**
  **Mysore 570018**
  **Karnataka (IN)**
• **GAURAW, Kunal**
  **Mysore 570018**
  **Karnataka (IN)**

(74) Representative: **Watson, Robert James et al
Mewburn Ellis LLP
City Tower
40 Basinghall Street
London EC2V 5DE (GB)**

(56) References cited:
**WO-A1-2009/108050     US-A1- 2001 036 307
US-A1- 2004 234 155     US-A1- 2008 212 168
US-A1- 2008 234 984     US-B1- 6 201 899**

**(Cont. next page)**

- ZHAO H ET AL: "Multi-focus color image fusion in the HSI space using the sum-modified-laplacian and a coarse edge map", IMAGE AND VISION COMPUTING, ELSEVIER, GUILDFORD, GB, vol. 26, no. 9, 1 September 2008 (2008-09-01), pages 1285-1295, XP022707485, ISSN: 0262-8856, DOI: 10.1016/J.IMAVIS.2008.03.007 [retrieved on 2008-04-06]

- RANIA HASSEN ET AL: "Multifocus Image Fusion Using Local Phase Coherence Measurement", 6 July 2009 (2009-07-06), IMAGE ANALYSIS AND RECOGNITION, SPRINGER BERLIN HEIDELBERG, BERLIN, HEIDELBERG, PAGE(S) 54 - 63, XP019122423, ISBN: 978-3-642-02610-2 * abstract * * section 3 *

## Description

### Field of the Invention

The invention relates to image processing field in general and particularly to a method and system for extending depth of field in an imaging device.

### Background of the Invention

Limited depth of field is a common problem in imaging devices such as conventional light microscope. Objects imaged in such cases are sharply in focus over a limited distance known as the depth of field. The Depth of field (DOF) is the distance between the nearest and farthest objects in a scene that appear acceptably sharp in an image. Typically sharpness decreases with depth resulting in blurriness in at least some part of the image. Also, in order to capture a large amount of light from a small specimen under the imaging device, one needs to have a high numerical aperture. However, high numerical aperture results in a very shallow depth of field, due to which it is not possible to have all region of the scene to be in focus.

To improve the depth of field in a captured image, one or more digital image processing techniques may be employed. Using the digital image processing techniques, images taken at different depths of field of the same scene may be combined to produce a single composite image. The digital image processing techniques involve capturing multiple images of the same scene to form an image stack, identifying focused part from multiple images in the stack and recreating a single image with better depth of field by combining the focused parts. During the digital processing process, index information of the images in the stack is collected and processed to generate a depth map and composite image or/and a 3D model of the scene.

Typically, greater the number of images in the image stack greater is the DOF in the composite image. Though with the increase in number of images in the stack, the complexity, time required for processing the images, errors in the composite image and memory requirement also increases. There are many processing techniques which provide solutions to improve the depth of field. However, the known solutions have one or the other drawback such as misalignment of the images in the stack, illumination variations in the composite image, noises in the Depth map and composite image, low quality of the composite image with blotchy background, edge shadowing and depth cross over, time complexity of the processes involved in depth of field calculations, too many manually configurable parameters and unable to manage large image stacks. The documents by Zhao et al., "Multi-focus color image fusion in the HSI space using the sum-modified-laplacian and a coarse edge map", Image and Vision Computing, vol. 26, 2008, and Hassen et al., "Multifocus Image Fusion Using Local Phase Coherence Measurement", International Conference on Image Analysis and Recognition, Canada, 2009, disclose two such known solutions. Therefore, there is a need to have an improved method and system for digital image processing that may address at least one of the above mentioned limitations.

### Summary of the Invention

According to embodiments of the invention an image processing method for constructing a composite image with extended depth of field from a plurality of source images as outlined in claim 1 is disclosed. According to another embodiment a system for constructing a composite image with extended depth of field from a plurality of source images of a scene as outlined in claim 12 is disclosed.

Other aspects, advantages, and salient features of the invention will become apparent to those skilled in the art from the following detailed description, which, taken in conjunction with the annexed drawings, discloses exemplary embodiments of the invention.

### Brief description of the Drawings

The above and other aspects, features, and advantages of certain exemplary embodiments of the invention will be more apparent from the following description taken in conjunction with the accompanying drawings in which:

FIG. 1 illustrates a flow chart of a method for processing a plurality of images taken of a scene to generate a composite image with extended depth of field, according to one embodiment of the invention;

FIG. 2 illustrates a method for performing illumination and color correction according to an embodiment of the invention; and

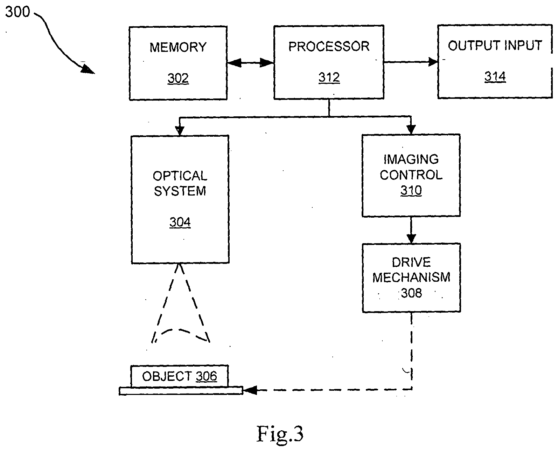

FIG. 3 illustrates a block diagram of a system for constructing a composite image with extended depth of field, from a plurality of source images of a scene according to one embodiment of the invention.

Persons skilled in the art will appreciate that elements in the figures are illustrated for simplicity and clarity and may have not been drawn to scale. For example, the dimensions of some of the elements in the figure may be exaggerated relative to other elements to help to improve understanding of various exemplary embodiments of the disclosure.

Throughout the drawings, it should be noted that like reference numbers are used to depict the same or similar elements, features, and structures.

## Detailed description of the Invention

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

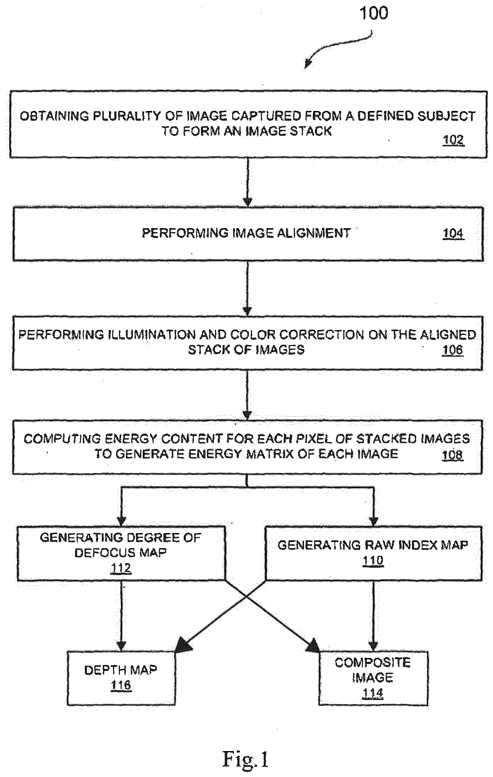

FIG. 1 illustrates a flow chart of a method 100 for processing a plurality of images taken of a scene to generate a composite image with extended depth of field, according to an exemplary embodiment of the invention. The extended depth of field indicates a greater depth of field in the composite/processed image as compared to the original image before processing.

At step 102, the method obtains a plurality of image captured from a defined subject, where the images are taken from different positions for said subject. According to an embodiment, the images may be captured from any known imaging device such as but not limiting to, optical microscope, digital camera, etc. According to another embodiment, the images may be obtained from an archive having images of said subject captured from different positions. According to yet another embodiment, the different positions include capturing images from different 'Z' level of the imaging device. The obtained images are arranged in a stack to form an image stack.

At step 104, the method performs image alignment. The image alignment is the process of transforming different sets of image data in the image stack so that all the images may have one coordinate system. The image data may be obtained from different sensors, at different time, or from different viewpoints. The image alignment process enables processing of the images obtained from the different measurements/sources. The image alignment process involves finding an optimal one-to-one mapping between the pixels in one image to those in other images in the stack.

According to one embodiment, a bi-directional image alignment method may be used for aligning the images in the image stack. The bi-directional image aligning method may include arranging the images in a sequence, such that the images are arranged as per their respective distance from the 'Z' level. Among the image sequence a first reference image may be selected, such that the first reference image is the substantially central image in the image sequence. The alignment process further includes comparing the first reference image with immediate left side and immediate right side images in the sequence. The geometric transformation between the immediate left side image and the immediate right side image may be calculated with respect to the first reference image. Based on calculations, the immediate left side image and the immediate right side image may be aligned with the first reference image. Subsequently immediate left side image may be compared with second image on the left side of the first reference image in the image sequence and immediate right side image may be compared with the second image on the right side of the first reference image in the image sequence and aligned with the immediate left side and the immediate right side images respectively. The process may be repeated for all the images thereby resulting in an aligned image stack that has substantially all images aligned with each other. The first and last image in the stack may have large variations and processing images in one direction that is from first to last may not provide effectively aligned image stack. Moreover processing images in one direction may result in a lot of time and memory consumption. On the other hand disclosed two way processing of images reduces time and result in better aligned stack of images.

According to an embodiment of the invention, the process of comparison and alignment may be performed by any known conventional method in the image alignment process. According to another embodiment of the invention, the process of comparison and alignment may be performed by the parametric image alignment process. The parametric image alignment process includes specifying the particular geometric parametric transformation and then estimating the parameter by means of any known optimization method. The miss-aligned images generally have an affine transformation and six parameters (a, b, c, d, e, and f) needed to be estimated for this:

$$x' = a*x + b*y + c$$

$$y' = d*x + e*y + f$$

These parameters may be identified using any known suitable optimization method. According to an exemplary embodiment of the invention, the disclosed method uses a hierarchical coarse-to-fine approach of parametric image alignment using gradient descent optimization method and normalized cross correlation as cost function based on image pyramids.

The exemplary illustrated method of comparison and alignment includes reducing the resolution on the images in the image stack by a scale factor in a range of between 1/2 to 1/16. According to yet another embodiment, the resolution of the images may be reduced by a scale factor of 1/8 of the original resolution to generate a stack of down sampled images. The method further includes creating an image pyramid of down sampled images and performing a coarse estimation of the transformation on the down sampled images. In microscopic imaging, the whole series of images or some part of a series of images may undergo through same transformations. Hence, if the second image undergoes through substantially same transformation, the transformation parameters obtained from the first image may be used as a clue or initial guess of transformation of next image. According to an embodiment, the hierarchical coarse-to-fine parametric image alignment process is implemented by a guided optimization process. The guided optimization process includes implementing an initial guess method/algorithm to search for global optima of the cost function faster by making it to start the iterations near the global optima position of the previous image cost function. The illustrated process of comparison and alignment is only exemplary in nature and may not be construed limiting on the invention. Any other known method/process of comparison and alignment may be used without going beyond the scope of the invention.

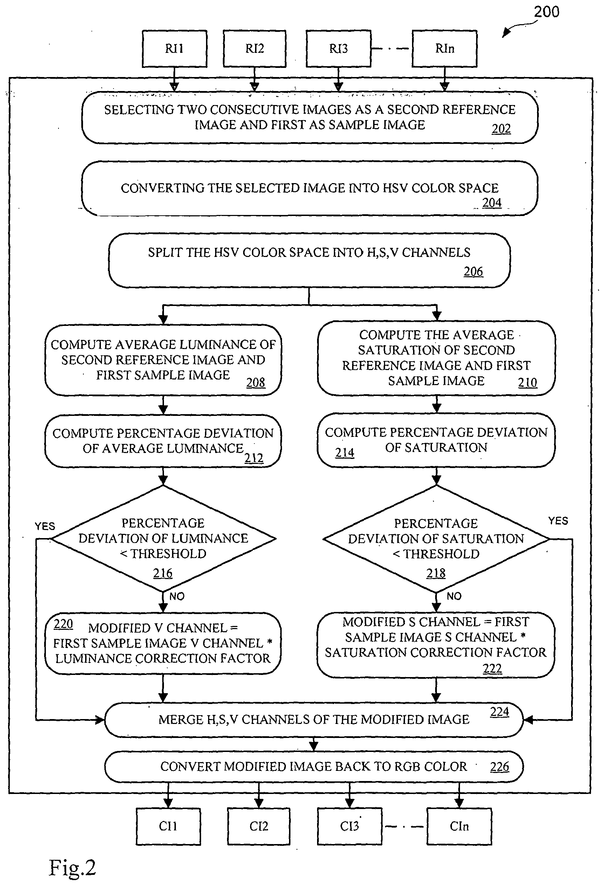

At step 106, the method performs illumination and color correction on the aligned stack of images. FIG. 2 illustrates an exemplary flow chart 200 to illustrate the method for performing illumination and color correction according to an embodiment of the invention. $RI_1$, $RI_2$, $RI_3...RI_n$, refers to the aligned images in the stack of images. The method 200 of performing illumination and color correction, at step 202 may include selecting at least two consecutive images from the stack of aligned images, where one of the image is considered as a second reference image and the other is considered as first sample image. At step 204, the selected images are converted from RGB colour space to HSV colour space. According to an embodiment of the invention, the conversion from RGB to HSV may be performed by any known method. At step 206, the HSV color images may be split into H S V channels. Further, at step 208 and step 210 the method computes the average value of luminance and average value of saturation for both the HSV images respectively. At step 212 and step 214, percentage deviation of average luminance and average saturation may be calculated respectively for the first sample image with respect to the second reference image. At step 216 and step 218, the percentage deviation of average luminance and percentage deviation of average saturation is compared with a predefined threshold value respectively. According to an embodiment, the threshold value is more than 2 per cent deviation. According to another embodiment, threshold value may be more than 5 per cent deviation. If the percentage deviation of average luminance is more than the predefined threshold value then the first sample image may be multiplied by a luminance correction factor at step 220, else the image may be retained without incorporating any change. The luminance correction factor is the ratio of the average value of the illumination of the first sample image divided by average value of illumination for the second reference image. Similarly, if the percentage deviation of average saturation is more than the predefined threshold value, then the first sample image may be multiplied by a saturation correction factor at step 222, else the image may be retained without incorporating any change. The luminance correction factor is the ratio of the average value of the saturation of the first sample image divided by average value of saturation for the second reference image. At step 224, the H S V channels of the processed images are merged together. The disclosed process may be repeated for all the images in the aligned image stack considering the corrected first sample image as second reference image for the next image and similarly repeating the process for other images. Once corrected, the images may be again converted in RGB color space at step 226 and stored in the image stack.

At step 108, the method computes energy content for each pixel of illuminated and color corrected stacked images to generate energy matrix of each image. According to an exemplary embodiment, complex wavelet decomposition method may be used for wavelet decomposition. According to the complex wavelet decomposition method, the step of computing energy content includes selecting one of the images from the illuminated and color corrected image stack. Selected image is converted from RGB color scale to grayscale for wavelet decomposition. The method further includes down sampling the grayscale image to a lower resolution exemplary by one level and normalizing the intensity values in the range of 0 to 1. Processing the image at a lower resolution may reduce the impulse noises present in the images and hence may provide better results. The method further includes, convolving the down sampled image with a complex wavelet filter bank to generate an energy matrix for said image. The process may be repeated for all the images in the illuminated and color corrected image stack so as to have at least one energy matrix for each image in the stack. According to another embodiment the energy matrix may be generated using any other known process such as but not limited to real wavelets (Haar, Daubechies), difference of Gaussians, variance, Tenengrad, Fourier transform and high pass filter.

At step 110, the method generates a raw index map for the scene. The process of generating raw index map includes analyzing the energy matrix's pixel by pixel basis for all the images and identifying maximum focused pixel for a particular pixel in the image stack. The process is repeated for all the pixels of the scene and an index of all the focused pixels may be used to generate the raw index map.

At step 112, the method generates degree of defocus map by comparing the energy content at a particular pixel against a reference signal, where the reference signal is a Gaussian curve. The Gaussian curve may be generated by identifying the peak focus measure values and the value of minima at left side and right side of the peak value for a particular pixel in the image stack by analyzing the energy matrix's generated at step 108. Using the log of the energy values of maxima and minima the Gaussian curve may be generated. The generated Gaussian curve may be used as the reference signal to compare the focus and out of focus regions in different image. The computed result may be used to generate degree of defocus map. Focus measure values in the regions where the object is focused, will follow Gaussian nature while other parts having extensive smoothness in texture follow random nature. Therefore pixels corresponding to focused part yield low gauss-fit values whereas smooth pixels yield high values. So, the in-focus segmentation of the object may be identified using degree of defocus map.

At step 114, the method may generate a composite image using the raw index map and the degree of defocus map. The index map, which is constructed by taking the index of the stack corresponding to the highest frequency in the temporal direction for each pixel, may contain noise (random index) wherever the scene is out of Focus. The noise needs to be removed and the index map needs to be further processed. According to an embodiment, the steps of refining the index map includes eliminating noise by masking the index map with the degree of defocus map, expanding the masked index map, blurring the result by a smoothing filter and overlapping the masked index map on blurred output. The out of focus regions may have high measure in the degree of defocus map. A threshold of at least 25% of the maximum value may be applied to remove the out of focus regions. According to yet another embodiment, in the composite image, the out of focus regions may be picked from the last image of the stack to avoid blotchiness. The current index values in the out of focus regions may be changed to maximum index values (index of the last image). The in-focus region in the index map may be dilated and blurred in order to get a smooth transition between the object index values and the highest index value of the out of focus region. Finally, the masked index map may be placed on the processed image to get the refined index map.

At step 116, the method generates a depth map using the raw index map and the degree of defocus map. The step of generating a depth map includes, performing depth interpolation by polynomial fitting of the maximum index value in the index map. Scaling the image in the available intensity range for detailed information of depth of object. Subtracting the background with help of weighted background mask and smooth the image for noise cancellation and up sampling the generated Depth Map to fit the original size of input image.

According to yet another embodiment, the plurality of source images of the scene may be distributed in two or more image stacks. Images in the first stack may be processed to generate a composite image by the method 100 illustrated above. The generated composite image is then included in the next image stack and again another composite is generated by processing images in the stack by the method 100 illustrated above. The same process may be followed for all the stacks to generate a final composite image. Illustrated process may save memory requirement, if the initial stack contains large number of images.

According to an embodiment, the disclosed exemplary method may be implemented as a computer program embedded in a carrier, such as but not limited to, a diskette, a CD-ROM or a modulated carrier wave.

According to yet another embodiment, a system 300 for constructing a composite image with extended depth of field, from a plurality of source images of a scene is disclosed. The composite image may be constructed from the plurality of source images of a scene stored in at least one image stack provided in a memory 302. The plurality of source images may be taken at substantially identical fields of view. According to an embodiment, the system may have arrangement for obtaining images such that each image being obtained at a different focal distance. As illustrated system 300 includes an optical system 304 having a field of view focused on the object 306. A drive mechanism 308, which may be controlled by an imaging control 310, may be coupled to the optical system 304 for changing the distance between the optical system 304 and the object 306. Accordingly the lens may be placed in a succession of different distances from the object, while concurrently maintaining the same field of view. According to another embodiment, the image plane may be kept at a substantially constant distance from the lens, while the focal length of the optical system 304 may be changed successively. The captured images may be stored in the memory 302.

The disclosed system 300 further includes a processing unit 312. According to an embodiment, the processing unit 312 may process the images to align the images in the image stack such that every image in the image stack is aligned with other images in the stack, perform illumination and color correction on the aligned images in the image stack, generate an energy matrix for each pixel of each illumination and color corrected image in the image stack by computing energy content for each pixel, generate a raw index map that contains the location of every pixels having maximum energy level among all the images in the image stack, generate degree of defocus map by comparing the energy content at a particular pixel against a reference signal and constructing the composite image using raw index map and degree of defocus map. The constructed image may be stored in the memory 302 or may be sent to an output unit 314 such as but not limited to image display, printer, video display screen etc.

In the foregoing detailed description of embodiments of the invention, various features are grouped together in a single embodiment for the purpose of streamlining the disclosure. This method of disclosure is not to be interpreted as reflecting an intention that the claimed embodiments of the invention require more features than are expressly recited in each claim. Rather, as the following claims reflect, inventive subject matter lies in less than all features of a single disclosed embodiment.

It is understood that the above description is intended to be illustrative, and not restrictive.

Many other embodiments will be apparent to those of skill in the art upon reviewing the above description. The scope of the invention should, however, be determined with reference to the appended claims.

**Claims**

1. An image processing method (100) for constructing a composite image with extended depth of field, from a plurality of source images of a scene stored (102) in at least one image stack, the plurality of source images being taken at substantially identical fields of view, the method comprising:

   aligning (104) the images in the image stack such that every image in the image stack is aligned with other images in the stack;
   performing (106, 200) illumination and color correction on the aligned images in the image stack;
   generating (108) an energy matrix for each pixel of each illumination and color corrected image in the image stack by computing energy content for each pixel;
   generating (110) a raw index map that contains the stack location of every pixel having a maximum energy level at a particular pixel position among all the images in the image stack;

   **characterized in that** the method further comprises:

   generating (112) a degree of defocus map by comparing the energy levels of all the images at a particular pixel position against a reference curve and repeating the process for all the pixels; and
   constructing (114) the composite image using the raw index map and the degree of defocus map.

2. The method as claimed in claim 1, wherein the images are aligned (104) by a bidirectional image alignment method, the bi-directional image alignment method comprises
   arranging the images in a sequence in the image stack
   selecting a first reference image, such that the first reference image is the substantially central image in the image sequence;
   aligning the first reference image with immediate left side and immediate right side images in the sequence;
   repeating the alignment process for the next image on left side and right side of the reference image with respect to the aligned images.

3. The method as claimed in claim 2, wherein the left side and right side images are aligned by a hierarchical coarse-to-fine parametric image alignment process.

4. The method as claimed in claim 3, wherein the hierarchical coarse-to-fine parametric image alignment process is implemented by a guided optimization process.

5. The method as claimed in claim 1, wherein the step of performing illumination and color correction (106, 200) comprises:

   selecting (202) a second reference image and a sample image from the aligned images such that the second reference image and the sample image are consecutive images in the image stack;
   converting (204) the selected images from RGB colour space to HSV colour space;
   computing (208, 210) an average luminance and an average saturation value of the HSV colour space images;
   calculating (212, 214) the percentage deviation of the average luminance and the average saturation for the first sample image with respect to the second reference image;
   multiplying (216, 220) the first sample image with a luminance correction factor, if the percentage deviation of the average luminance is more than a predefined threshold level, and/or multiplying (218, 222) the first sample image with a saturation correction factor, if the percentage deviation of the average saturation variation is more than a predefined threshold level to obtain the modified first sample image, else using the first sample image as modified first sample image;
   repeating the process for all the images, by considering the modified first sample image image as the first reference image and next consecutive image as first sample image; and
   converting (226) the modified images from HSV color scale to RGB color scale.

6. The method as claimed in claim 5, wherein the predefined threshold level is more than 2 per cent deviation of the average luminance and/or the average saturation variation.

7. The method as claimed in claim 5, wherein the luminance correction factor is the ratio of the average value of the illumination of the first sample image divided by average value of illumination for the second reference image.

8. The method as claimed in claim 5, wherein the saturation correction factor is the ratio of the average value of the saturation of the first sample image divided by average value of saturation for the second reference image.

9. The method as claimed in claim 1, wherein the step (108) of generating an energy matrix comprises:

> converting each color and illumination corrected RGB image to grayscale image;
> down sampling the image to low resolution of intensity values in the range of 0 to 1;
> convolving the down sampled image with a complex wavelet filter bank to generate the energy matrix.

10. The method, as claimed in claim 1, wherein the reference curve is a Gaussian curve generated by:

> taking an array of energy values from the energy matrices in a Z-direction through the image stack for each pixel location and identifying a peak value in each array;
> identifying a local minima on both sides of the peak energy value in the array; and
> generating the Gaussian curve by taking log of the energy values between the maxima and two minima.

11. The method as claimed in claim 1, wherein the images stored in at least one image stack are processed to generate one composite image and the generated composite image is stored in the next image stack, if the plurality of source images are stored in two or more image stacks.

12. A system (300) for constructing a composite image with extended depth of field, from a plurality of source images of a scene comprising:

> a memory (302) configured to store a plurality of source images of a scene taken at substantially identical fields of view;
> a processing unit (312) configured to process the images stored in the memory (302), to align the images in the image stack such that every image in the image stack is aligned with other images in the stack, perform illumination and color correction on the aligned images in the image stack, generate an energy matrix for each pixel of each illumination and color corrected image in the image stack by computing energy content for each pixel, generate a raw index map that contains the stack location of every pixel having a maximum energy level at a particular pixel position among all the images in the image stack; and
> an output unit (314) configured to display the composite image received from the processing unit (312), **characterized in that** the processing unit (312) is configured to generate a degree of defocus map by comparing the energy levels of all the images at a particular pixel position against a reference curve and construct the composite image using the raw index map and the degree of defocus map.

13. A system as claimed in claim 12, further comprises an arrangement configured to obtain images at a different focal distance.

14. A system as claimed in claim 13, wherein the arrangement configured to obtain images comprises: an optical system (304) configured to captured images; and a drive mechanism (308) in signal communication with the optical system (304), the drive mechanism being controlled by an imaging control system (310) configured to change the distance between the object (306) and optical system (304).

**Patentansprüche**

1. Bildverarbeitungsverfahren (100) zum Konstruieren eines zusammengesetzten Bildes mit erweiterter Tiefenschärfe aus einer Vielzahl von Quellbildern einer in mindestens einem Bildstapel gespeicherten Szene, wobei die Vielzahl von Quellbildern bei im Wesentlichen identischen Sichtfeldern aufgenommen wird, wobei das Verfahren Folgendes umfasst:

> Ausrichten (104) der Bilder in dem Bildstapel derart, dass jedes Bild im Bildstapel mit anderen Bildern im Stapel ausgerichtet ist;
> Ausführen (106, 200) von Aufhellungs- und Farb-Korrektur auf den ausgerichteten Bildern im Bildstapel;
> Erzeugen (108) einer Energiematrix für jedes Pixel von jedem aufhellungs- und farb-korrigierten Bild im Bildstapel durch Berechnen des Energiegehalts für jedes Pixel;
> Erzeugen (110) einer unbearbeiteten Index-Abbildung, die den Stapelort von jedem Pixel, das einen Maximalenergiepegel in einer bestimmten Pixelposition unter allen Bildern im Bildstapel aufweist, enthält;

> **dadurch gekennzeichnet, dass** das Verfahren ferner Folgendes umfasst:

> Erzeugen (112) einer Defokussierungsgrad-Abbildung durch Vergleichen der Energiepegel aller Bilder in einer bestimmten Pixelposition mit einer Referenzkurve, und Wiederholen des Verfahrens für alle Pixel; und
> Konstruieren (114) des zusammengesetzten Bildes unter Verwendung der unbearbeiteten Index-Abbildung und der Defokussierungsgrad-Abbildung.

2. Verfahren gemäß Anspruch 1, worin die Bilder durch

ein bidirektionales Bildausrichtverfahren ausgerichtet werden (104), wobei das bidirektionale Bildausrichtungsverfahren Folgendes umfasst:

Anordnen der Bilder in einer Reihenfolge im Bildstapel

Auswählen eines ersten Referenzbildes, sodass das erste Referenzbild das im Wesentlichen zentrale Bild in der Bildfolge ist;

Ausrichten des ersten Referenzbildes mit unmittelbar linksseitigen und unmittelbar rechtsseitigen Bildern in der Reihenfolge;

Wiederholen des Ausrichtungsverfahrens für das nächste Bild auf der linken Seite und auf der rechten Seite des Referenzbildes mit Bezug auf die ausgerichteten Bilder.

3. Verfahren gemäß Anspruch 2, worin die linksseitigen und die rechtsseitigen Bilder durch ein hierarchisches grob-fein-parametrisches Bildausrichtungsverfahren ausgerichtet werden.

4. Verfahren gemäß Anspruch 3, worin das hierarchische grob-feinparametrische Bildausrichtungsverfahren durch ein geführtes Optimierungsverfahren implementiert wird.

5. Verfahren gemäß Anspruch 1, worin der Schritt des Ausführens der Aufhellungs- und der Farb-Korrektur (106, 200) Folgendes umfasst:

Auswählen (202) eines zweiten Referenzbildes und eines Musterbildes aus den ausgerichteten Bildern derart, dass das zweite Referenzbild und das Musterbild aufeinanderfolgende Bilder im Bildstapel sind;

Umwandeln (204) der ausgewählten Bilder von RGB-Farbraum zu HSV-Farbraum;

Berechnen (208, 210) einer mittleren Helligkeit und eines mittleren Sättigungswertes der HSV-Farbraumbilder;

Berechnen (212, 214) der prozentualen Abweichung der mittleren Helligkeit und der mittleren Sättigung für das erste Musterbild mit Bezug auf das zweite Referenzbild;

Multiplizieren (216, 220) des ersten Musterbildes mit einem Helligkeitskorrekturfaktor, wenn die prozentuale Abweichung der mittleren Helligkeit mehr als ein vordefinierter Schwellenwertpegel ist, und/oder Multiplizieren (218, 222) des ersten Musterbildes mit einem Sättigungskorrekturfaktor, wenn die prozentuale Abweichung der mittleren Sättigungsvariation mehr als ein vordefinierter Schwellenwertpegel ist, um das modifizierte erste Musterbild zu erhalten, andernfalls Verwenden des ersten Musterbildes als das modifizierte erste Musterbild;

Wiederholen des Verfahrens für alle Bilder, wobei das modifizierte erste Musterbild als das erste Referenzbild und das darauffolgende Bild als das erste Musterbild angesehen wird; und

Umwandeln (226) der modifizierten Bilder von der HSV-Farbskala zur RGB-Farbskala.

6. Verfahren gemäß Anspruch 6, worin der vordefinierte Schwellenwertpegel mehr als 2 Prozent Abweichung der mittleren Helligkeit und/oder der mittleren Sättigungsvariation ist.

7. Verfahren gemäß Anspruch 5, worin der Helligkeitskorrekturfaktor das Verhältnis des mittleren Werts der Aufhellung des ersten Musterbildes dividiert durch den mittleren Wert der Aufhellung für das zweite Referenzbild ist.

8. Verfahren gemäß Anspruch 5, worin der Sättigungskorrekturfaktor das Verhältnis des mittleren Werts der Sättigung des ersten Musterbildes dividiert durch den mittleren Wert der Sättigung für das zweite Referenzbild ist.

9. Verfahren gemäß Anspruch 1, worin der Schritt (108) des Erzeugens einer Energiematrix Folgendes umfasst:

Umwandeln jedes Farb- und Aufhellungs-korrigierten RGB-Bildes in ein Grauskalenbild;

Abwärtsabtasten des Bildes zu einer niedrigen Auflösung von Intensitätswerten im Bereich von 0 bis 1;

Falten des abwärtsabgetasteten Bildes mit einer komplexen Wavelet-Filterbank, um die Energiematrix zu erzeugen.

10. Verfahren gemäß Anspruch 1, worin die Referenzkurve eine Gauß'sche Kurve ist, die durch Folgendes erzeugt wird:

Entnehmen einer Anordnung von Energiewerten aus den Energiematrizen in eine Z-Richtung durch den Bildstapel für jeden Pixelort und Identifizieren eines Spitzenwerts in jeder Anordnung;

Identifizieren eines lokalen Minimums auf beiden Seiten des Spitzenenergiewerts in der Anordnung; und

Erzeugen der Gauß'schen Kurve durch Nehmen des Logarithmus der Energiewerte zwischen dem Maximum und zwei Minima.

11. Verfahren gemäß Anspruch 1, worin die in mindestens einem Bildstapel gespeicherten Bilder verarbeitet werden, um ein zusammengesetztes Bild zu erzeugen, und das erzeugte zusammengesetzte Bild im nächsten Bildstapel gespeichert wird, wenn die Vielzahl von Quellbildern in zwei oder mehreren Bildstapeln gespeichert ist.

**12.** System zum Konstruieren eines zusammengesetzten Bildes mit erweiterter Tiefenschärfe aus einer Vielzahl von Quellbildern einer Szene, das Folgendes umfasst:

einen Speicher (302), der konfiguriert ist, eine Vielzahl von Quellbildern einer Szene zu speichern, die bei im Wesentlichen identischen Sichtfeldern aufgenommen worden ist;
eine Verarbeitungseinheit (312), die konfiguriert ist, die im Speicher (302) gespeicherten Bilder zu verarbeiten, um die Bilder im Bildstapel derart auszurichten, dass jedes Bild in dem Bildstapel mit anderen Bildern im Stapel ausgerichtet ist; eine Aufhellungs- und Farb-Korrektur auf den ausgerichteten Bildern im Bildstapel auszuführen, eine Energiematrix für jedes Pixel von jedem Aufhellungs- und Farb-korrigierten Bild im Bildstapel durch Berechnen des Energiegehalts für jedes Pixel zu erzeugen, eine unbearbeitete Index-Abbildung zu erzeugen, die den Stapelort von jedem Pixel, das einen Maximalenergiepegel in einer bestimmten Pixelposition unter allen Bildern im Bildstapel aufweist, enthält; und eine Ausgabeeinheit (314), die konfiguriert ist, das von der Verarbeitungseinheit (312) empfangene, zusammengesetzte Bild anzuzeigen, **dadurch gekennzeichnet, dass** die Verarbeitungseinheit (312) konfiguriert ist, eine Defokussierungsgrad-Abbildung durch Vergleichen der Energiepegel aller Bilder in einer bestimmten Pixelposition mit einer Referenzkurve zu erzeugen, und das zusammengesetzte Bild unter Anwendung der unbearbeiteten Index-Abbildung und der Defokussierungsgrad-Abbildung zu konstruieren.

**13.** System gemäß Anspruch 12, ferner umfassend eine Anordnung, die konfiguriert ist, Bilder bei einer unterschiedlichen Brennweite zu erzielen.

**14.** System gemäß Anspruch 13, worin die zur Erzielung von Bildern konfigurierte Anordnung Folgendes umfasst:

ein optisches System (304), das konfiguriert ist, Bilder zu erfassen; und
einen Ansteuermechanismus (308), der in Signalkommunikation mit dem optischen System (304) ist, wobei der Ansteuermechanismus durch ein Bildgebungssteuerungssystem (310) gesteuert wird, das konfiguriert ist, den Abstand zwischen dem Objekt (306) und dem optischen System (304) zu ändern.

**Revendications**

**1.** Procédé de traitement d'image (100) pour construire une image composite avec une profondeur de champ étendue, à partir d'une pluralité d'images de source d'une scène mémorisées (102) dans au moins une pile d'images, la pluralité d'images de source étant prises à des champs de vision sensiblement identiques, le procédé comprenant :

l'alignement (104) des images dans la pile d'images de sorte que chaque image dans la pile d'images soit alignée avec les autres images dans la pile ;
l'exécution (106, 200) d'une correction de l'éclairage et des couleurs sur les images alignées dans la pile d'images ;
la génération (108) d'une matrice d'énergie pour chaque pixel de chaque image corrigée quant à l'éclairage et aux couleurs dans la pile d'images en calculant le contenu d'énergie pour chaque pixel ;
la génération (110) d'une carte d'index brute qui contient l'emplacement dans la pile de chaque pixel ayant un niveau d'énergie maximum à une position de pixel particulière parmi toutes les images dans la pile d'images ;

**caractérisé en ce que** le procédé comprend en outre :

la génération (112) d'une carte de degrés de défocalisation en comparant les niveaux d'énergie de toutes les images à une position de pixel particulière avec une courbe de référence et en répétant le processus pour tous les pixels ; et
la construction (114) de l'image composite en utilisant la carte d'index brute et la carte de degrés de défocalisation.

**2.** Procédé selon la revendication 1, dans lequel les images sont alignées (104) par un procédé d'alignement d'images bidirectionnel, le procédé d'alignement d'images bidirectionnel comprend :

l'agencement des images en une séquence dans la pile d'images ;
la sélection d'une première image de référence, de sorte que la première image de référence soit l'image sensiblement centrale dans la séquence d'images ;
l'alignement de la première image de référence avec les images immédiatement à gauche et immédiatement à droite dans la séquence ;
la répétition du processus d'alignement pour l'image suivante du côté gauche et du côté droit de l'image de référence par rapport aux images alignées.

**3.** Procédé selon la revendication 2, dans lequel les images du côté gauche et du côté droit sont alignées par un processus d'alignement d'images paramétrique de grossier à fin hiérarchique.

**4.** Procédé selon la revendication 3, dans lequel le processus d'alignement d'images paramétrique de grossier à fin hiérarchique est mis en oeuvre par un processus d'optimisation guidée.

**5.** Procédé selon la revendication 1, dans lequel l'étape d'exécution de correction de l'éclairage et des couleurs (106, 200) comprend :

la sélection (202) d'une deuxième image de référence et d'une image échantillon parmi les images alignées de sorte que la deuxième image de référence et l'image échantillon soient des images consécutives dans la pile d'images ;
la conversion (204) des images sélectionnées de l'espace de couleurs RVB vers l'espace de couleurs HSV ;
le calcul (208, 210) d'une valeur de luminance moyenne et d'une valeur de saturation moyenne des images d'espace de couleurs HSV ;
le calcul (212, 214) de l'écart en pourcentage de la luminance moyenne et de la saturation moyenne pour la première image échantillon par rapport à la deuxième image de référence ;
la multiplication (216, 220) de la première image échantillon par un facteur de correction de luminance, si l'écart en pourcentage de la luminance moyenne est supérieur à un niveau de seuil prédéfini, et/ou la multiplication (218, 222) de la première image échantillon par un facteur de correction de saturation, si l'écart en pourcentage de la variation de saturation moyenne est supérieur à un niveau de seuil prédéfini pour obtenir la première image échantillon modifiée, autrement l'utilisation de la première image échantillon en tant que première image échantillon modifiée ;
la répétition du processus pour toutes les images, en considérant la première image échantillon modifiée en tant que première image de référence et l'image consécutive suivante en tant que première image échantillon ; et
la conversion (226) des images modifiées de l'échelle des couleurs HSV vers l'échelle des couleurs RVB.

**6.** Procédé selon la revendication 5, dans lequel le niveau de seuil prédéfini est supérieur à un écart de 2 % de la luminance moyenne et/ou de la variation de saturation moyenne.

**7.** Procédé selon la revendication 5, dans lequel le facteur de correction de luminance est le rapport de la valeur moyenne de l'éclairage de la première image échantillon divisée par la valeur moyenne de l'éclairage pour la deuxième image de référence.

**8.** Procédé selon la revendication 5, dans lequel le facteur de correction de saturation est le rapport de la valeur moyenne de la saturation de la première image échantillon divisée par la valeur moyenne de la saturation pour la deuxième image de référence.

**9.** Procédé selon la revendication 1, dans lequel l'étape (108) de génération d'une matrice d'énergie comprend :

la conversion de chaque image RVB corrigée quant aux couleurs et à l'éclairage en une image en échelle de gris ;
le sous-échantillonnage de l'image en des valeurs d'intensité de faible résolution dans la plage de 0 à 1 ;
la convolution de l'image sous-échantillonnée avec une banque de filtres d'ondelettes complexes pour générer la matrice d'énergie.

**10.** Procédé, selon la revendication 1, dans lequel la courbe de référence est une courbe gaussienne générée en :

prenant un réseau de valeurs d'énergie à partir des matrices d'énergie dans une direction Z à travers la pile d'images pour chaque emplacement de pixel et identifiant une valeur crête dans chaque réseau ;
identifiant un minimum local des deux côtés de la valeur d'énergie crête dans le réseau ; et générant la courbe gaussienne en prenant l'enregistrement des valeurs d'énergie entre le maximum et deux minimums.

**11.** Procédé selon la revendication 1, dans lequel les images mémorisées dans au moins une pile d'images sont traitées pour générer une image composite et l'image composite générée est mémorisée dans la pile d'images suivante, si la pluralité d'images de source sont mémorisées dans deux piles d'images ou plus.

**12.** Système (300) pour construire une image composite avec une profondeur de champ étendue, à partir d'une pluralité d'images de source d'une scène comprenant :

une mémoire (302) configurée pour mémoriser une pluralité d'images de source d'une scène prises avec des champs de vision sensiblement identiques ;
une unité de traitement (312) configurée pour traiter les images mémorisées dans la mémoire (302), pour aligner les images dans la pile d'images de sorte que chaque image dans la pile d'images soit alignée avec les autres images dans la pile, effectuer une correction d'éclairage et des couleurs sur les images alignées dans la pile d'images, générer une matrice d'énergie pour chaque pixel de chaque image corrigée quant à l'éclairage et aux couleurs dans la pile d'images en calculant le contenu d'énergie pour chaque pixel, générer une carte d'index brute qui contient l'emplacement dans la pile de chaque pixel ayant un niveau d'énergie maximum à une position de pixel particulière parmi toutes les images dans la pile d'images ; et

une unité de sortie (314) configurée pour afficher l'image composite reçue de l'unité de traitement (312),

**caractérisé en ce que** l'unité de traitement (312) est configurée pour générer une carte de degrés de défocalisation en comparant les niveaux d'énergie de toutes les images à une position de pixel particulière avec une courbe de référence et construire l'image composite en utilisant la carte d'index brute et la carte de degrés de défocalisation.

13. Système selon la revendication 12, comprenant en outre un agencement configuré pour obtenir des images à différentes distances focales.

14. Système selon la revendication 13, dans lequel l'agencement configuré pour obtenir des images comprend :

un système optique (304) configuré pour capturer des images ; et
un mécanisme d'entraînement (308) en communication de signaux avec le système optique (304), le mécanisme d'entraînement étant commandé par un système de commande de formation d'image (310) configuré pour changer la distance entre l'objet (306) et le système optique (304).

Fig.1

200

RI1    RI2    RI3 — · — RIn

SELECTING TWO CONSECUTIVE IMAGES AS A SECOND REFERENCE
IMAGE AND FIRST AS SAMPLE IMAGE    202

CONVERTING THE SELECTED IMAGE INTO HSV COLOR SPACE
204

SPLIT THE HSV COLOR SPACE INTO H,S,V CHANNELS
206

COMPUTE AVERAGE LUMINANCE OF
SECOND REFERENCE IMAGE AND
FIRST SAMPLE IMAGE    208

COMPUTE THE AVERAGE
SATURATION OF SECOND
REFERENCE IMAGE AND FIRST
SAMPLE IMAGE    210

COMPUTE PERCENTAGE DEVIATION
OF AVERAGE LUMINANCE 212

COMPUTE PERCENTAGE DEVIATION
214    OF SATURATION

YES    PERCENTAGE
DEVIATION OF LUMINANCE
< THRESHOLD
216

PERCENTAGE
DEVIATION OF SATURATION
< THRESHOLD
218    YES

NO

220    MODIFIED V CHANNEL =
FIRST SAMPLE IMAGE V CHANNEL *
LUMINANCE CORRECTION FACTOR

NO

MODIFIED S CHANNEL = FIRST
SAMPLE IMAGE S CHANNEL *
SATURATION CORRECTION FACTOR
222

MERGE H,S,V CHANNELS OF THE MODIFIED IMAGE    224

CONVERT MODIFIED IMAGE BACK TO RGB COLOR ·    226

CI1    CI2    CI3 — · — CIn

Fig.2

300

| MEMORY | | PROCESSOR | | OUTPUT INPUT |
|:------:|---|:---------:|---|:------------:|
| 302 | | 312 | | 314 |

| OPTICAL SYSTEM | IMAGING CONTROL |
|:--------------:|:---------------:|
| 304 | 310 |

DRIVE MECHANISM
308

OBJECT 306

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHAO et al.** Multi-focus color image fusion in the HSI space using the sum-modified-laplacian and a coarse edge map. *Image and Vision Computing,* 2008, vol. 26

- **HASSEN et al.** Multifocus Image Fusion Using Local Phase Coherence Measurement. *International Conference on Image Analysis and Recognition,* 2009